(19) **Europäisches Patentamt**

**European Patent Office**

**Office européen des brevets**

(11) **EP 1 279 900 B1**

(12) **EUROPEAN PATENT SPECIFICATION**

(45) Date of publication and mention
of the grant of the patent:
**21.06.2006 Bulletin 2006/25**

(51) Int Cl.:
**F24F 11/00** *(2006.01)*

(21) Application number: **02290820.6**

(22) Date of filing: **03.04.2002**

(54) **Operation controlling method for air conditioner**

Verfahren zur Steuerung des Betriebs einer Klimaanlage

Procédé pour la commande du fonctionnement d'un dispositif de climatisation

(84) Designated Contracting States:
**DE FR GB**

(30) Priority: **26.07.2001 KR 2001045175**

(43) Date of publication of application:
**29.01.2003 Bulletin 2003/05**

(73) Proprietor: **LG ELECTRONICS INC.**
**Seoul (KR)**

(72) Inventors:
• **Park, Jong-Han,**
**Jugong Apt.**
**Gwangmyeong,**
**Gyeonggi-Do (KR)**
• **Choi, Ho-Seon,**
**Geukdong Apt.**
**Seoul (KR)**
• **Youm, Kwan Ho,**
**Hanjin Town Apt.**
**Seoul (KR)**
• **Lee, Gi-Seop,**
**Jugong Apt.**
**Gwangmyeong,**
**Gyeonggi-Do (KR)**

(74) Representative: **Loisel, Bertrand**
**Cabinet Plasseraud**
**65/67 rue de la Victoire**
**75440 Paris Cedex 09 (FR)**

(56) References cited:
**US-A- 4 841 738        US-A- 5 590 831**
**US-A- 5 713 516        US-A- 5 771 705**

**Description**

BACKGROUND OF THE INVENTION

1. Field of the Invention

The present invention relates to an operation controlling method for an air conditioner, and particularly, to an operation controlling method for an air conditioner which is able to improve a feeling of warmth and comfortable feeling of a user by controlling an indoor temperature according to a desire temperature of the user.

2. Description of the Background Art

Generally, air conditioners can be divided into cooling devices for cooling indoor hot air, and heating devices for heating indoor cold air.

Recently, an air conditioner having dehumidification function as well as the cooling and heating functions is developed and sold (see for example US-5 771 705). The above air conditioner will be described with reference to Figure 1 as follows.

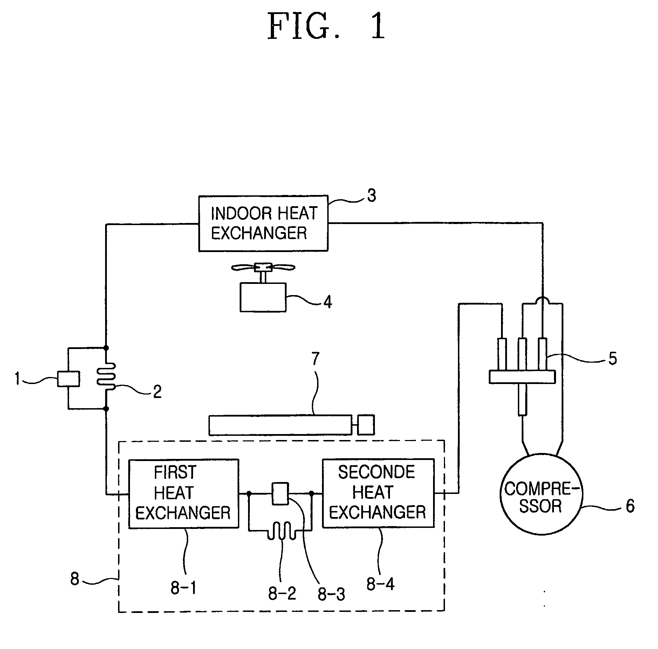

Figure 1 is a block diagram showing a structure of a general air conditioner schematically.

As shown therein, the air conditioner comprises: a compressor 6 for making steam of high temperature and high pressure by sucking and compressing refrigerant steam of low temperature and low pressure discharged from an indoor heat exchanger 8; an outdoor heat exchanger 3 for changing the refrigerant gas discharged from the compressor 6 into saturated liquid of high pressure; an indoor heat exchanger 8 for changing the saturated liquid of high pressure discharged from the outdoor heat exchanger 3 into refrigerant of low temperature and low pressure through an expansion device 2, and after that, making the above refrigerant saturated steam having no liquid by evaporating the refrigerant; a four-way valve 5 for controlling flow of the refrigerant according to heating mode or cooling mode; and a two-way valve 1 for discharging the refrigerant of high pressure as it is into the indoor heat exchanger 8 during dehumidifying process.

The indoor heat exchanger 8 comprises: a first heat exchanger 8-1 for sucking refrigerant in which liquid of high pressure and gas are mixed and discharging liquid of high pressure by discharging the heat during dehumidifying process; an expansion device 8-2 decreasing the pressure of the liquid in the first heat exchanger 8-1; a second heat exchanger 8-4 sucking the refrigerant, in which liquid of low pressure and the gas is mixed, through the expansion device 8-2 and evaporating the above refrigerant to discharge refrigerant of low pressure and low temperature having no liquid element; and a two-way valve 8-3 for blocking direct discharge of the liquid of high pressure, which is discharged from the first heat exchanger 8-1, to the second heat exchanger 8-4 during dehumidifying process. In addition, an operation of the air conditioner constructed as above will be described as follows.

In case of heating mode, the refrigerant of high temperature and high pressure compressed in the compressor 6 is flowed into the indoor heat exchanger 8 through the four-way valve 5 and condensed, and after that, the refrigerant is changed into the refrigerant of low temperature and low pressure through the expansion device 2. At that time, indoor air sucked through a indoor fan 7 is passed through a surface of the indoor heat exchanger 8, and then, the heat is exchanged to blow out hot air. Thereby the indoor temperature is increased. Herein, the indoor heat exchanger 8 opens the two-way valve 8-3 between the first heat exchanger 8-1 and the second heat exchanger 8-4 to be operated as a condenser.

After that, the outdoor heat exchanger 3 sucks the refrigerant of low temperature and low pressure and evaporates to discharge the refrigerant of gas state, and the compressor 6 sucks the refrigerant of gas state discharged from the outdoor heat exchanger 8 and compresses the refrigerant to be the refrigerant of high temperature and high pressure. The above operations are repeated to perform the heating operation.

On the other hand, in case of cooling mode, the refrigerant of high temperature and high pressure compressed in the compressor 6 is passed through the four-way valve, and flowed into the outdoor heat exchanger 3 to be condensed. After that, the refrigerant is changed into the refrigerant of low temperature and low pressure through the expansion device 2.

After that, the indoor heat exchanger 8 sucks the refrigerant of low temperature and low pressure and evaporates the refrigerant to discharge the refrigerant of gas state, and the compressor 6 sucks the gas refrigerant discharged from the indoor heat exchanger 8 and compresses the refrigerant to be the refrigerant of high temperature and high pressure. At that time, the indoor heat exchanger 8 opens the two-way valve 8-3 between the first heat exchanger 8-1 and the second heat exchanger 8-4 to be operated as an evaporator.

Herein, the indoor air sucked by the indoor fan 7 passes through a cold surface of the indoor heat exchanger 8, and then, the heat is exchanged and the cold air is blown into the room, and therefore, the indoor temperature is lowered.

On the other hand, in case of dehumidifying, the refrigerant of high temperature and high pressure is flowed into the outdoor heat exchanger 3 passing through the four-way valve 5. At that time, an outdoor fan 4 rotates at lower speed, and therefore, the refrigerant of high temperature and high pressure passes through the two-way valve 1 in the state that the refrigerant is little cooled down and flowed into the indoor heat exchanger 8.

After that, the indoor heat exchanger 8 blocks the inner two-way valve 8-3 to separate the first heat exchanger 8-1 and the second heat exchanger 8-4. That is, the first heat exchanger 8-1 sucks the refrigerant of high pressure in which the liquid and the gas are mixed and discharges the heat to exhaust the liquid of high pressure, and the second heat exchanger 8-4 sucks the liquid of high pressure exhausted from the first heat exchanger 8-1 as the liquid of low pressure through the expansion device 8-2. In addition, the second heat exchanger 8-4 evaporates the above liquid to discharge the refrigerant of low temperature and low pressure including no liquid element. At that time, the indoor air sucked by the indoor fan 7 passes through the cold surface of the second heat exchanger 8-4, and thereby the heat is exchanged and the humidity is removed. And then, the dried air passes through the hot surface of the first heat exchanger 8-1, and discharged into the room as being heated.

Herein, the operation controlling method of the above device will be described as follows. When a user sets an initial desire temperature, the operation is controlled so that the indoor temperature is maintained around the desire temperature by supplying or blocking the cold air as turning on/off the compressor 6 around the desire temperature. That is, an On condition of the compressor 6 is set to be the temperature adding 0.5°C to the desire temperature, and an Off condition of the compressor 6 is set to be the temperature subtracting 0.5°C from the desire temperature, and thereby, the indoor temperature is controlled. At that time, the operations of increasing and decreasing around the desire temperature with a predetermined temperature intervals are always performed, and therefore, the discrimination in the feelings of warm and cold that the user may feel is reduced after a certain time period is passed, and thereby, pleasant air conditioning can not be provided.

SUMMARY OF THE INVENTION

Therefore, an object of the present invention is to provide an operation controlling method for an air conditioner which is able to increase a feeling of warmth and pleasant feeling of a user by increasing or decreasing an amplitude of an indoor temperature according to a desire temperature of the user.

To achieve the object of the present invention, as embodied and broadly described herein, there is provided an operation controlling method for an air conditioner comprising: a step of setting a predetermined numbers of reference temperatures; a step of comparing a desire temperature of a user to the set reference temperatures; and a step of controlling an operation of the air conditioner so that increasing width and decreasing width of the indoor temperature are increased or decreased as a predetermined value according to the desire temperature of the user.

The foregoing and other objects, features, aspects and advantages of the present invention will become more apparent from the following detailed description of the present invention when taken in conjunction with the accompanying drawings.

BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:

Figure 1 is a block diagram showing a rough structure of a general air conditioner;

Figure 2 is a flow chart showing an operation controlling method for an air conditioner according to the present invention;

Figure 3 is a view showing pleasant feeling of a user when the operation controlling method according to the present invention is applied to the air conditioner; and

Figure 4 is a chart comparing an amplitude of indoor temperature, which is changed in accordance with a desire temperature of a user, according to the present invention to an amplitude of indoor temperature of the conventional art.

DETAILED DESCRIPTION OF THE PREFERRED EMBODIMENTS

Reference will now be made in detail to the preferred embodiments of the present invention, examples of which are illustrated in the accompanying drawings.

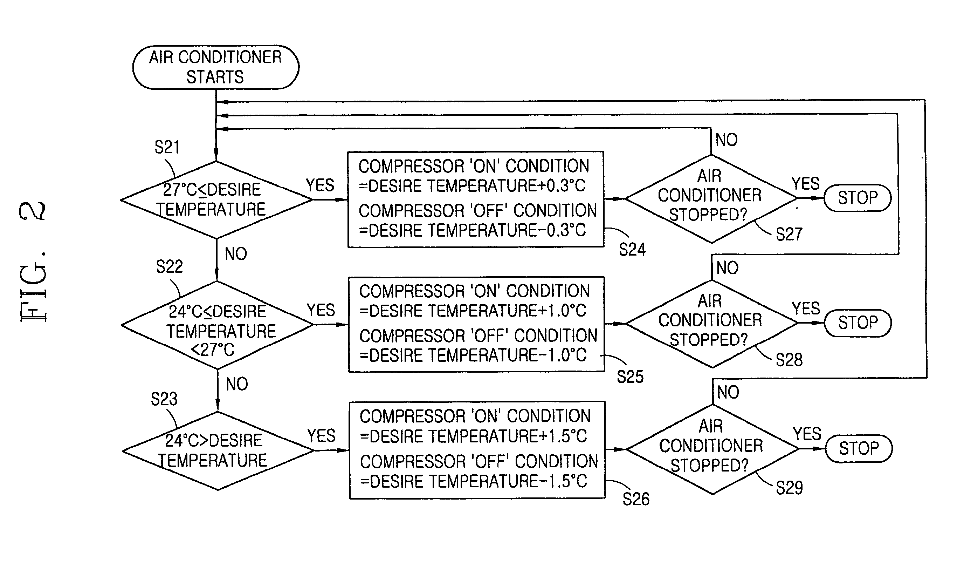

Hereinafter, preferred embodiments of an operation controlling method for an air conditioner which is able to increase the feeling of warmth and the pleasant feeling by increasing or decreasing an amplitude of indoor temperature (increasing width and decreasing width) according to a desire temperature of a user will be described with reference to Figures 2 through 4 in details.

Figure 2 is a flow chart showing the operation controlling method for the air conditioner according to the present invention.

As shown therein, the operation controlling method for the air conditioner according to the present invention comprises: a step of setting a desire temperature by a user; a step of comparing the set desire temperature to a plurality of reference temperatures which were set in advance; and a step of increasing or decreasing an amplitude of indoor temperature (rising amplitude and descending amplitude) according to the desire temperature as the result of the comparing. Hereinafter, the operation controlling method for the air conditioner will be described in more detail with reference to Figure 1.

A plurality of reference temperatures are set according to the desire temperature set by the user. Herein, it is desirable that the reference temperatures are 27°C and 24°C.

Also, the rising amplitude and the descending amplitude are set according to the plurality of reference temperatures in advance. That is, the reference temperatures are set to be 27°C and 24°C as shown in Figure 2, and the rising amplitude and the descending amplitude of the indoor temperature are increased or decreased as '0.3°C, 1°C, or 1.5°C' according to the desire temperature of the user. The above process will be described in more detail as follows.

In case that the desire of the user is 27°C or more after comparing the desire temperature to the reference temperature (S21), when the temperature is reached to the temperature 0.3°C added to the desire temperature (27.3°C or more), the operation of the compressor 6 is turned on to supply cool air inside the room. At that time, when the indoor temperature is descended to the temperature subtracted 0.3°C from the desire temperature as the cool air is provided in the room, the operation of the compressor 6 is turned off to block the cool air. That is, in case that the desire temperature of the user is 27°C, the amplitude of the indoor temperature (rising amplitude and descending amplitude) is set to be ±0.3°C to control the indoor temperature(S24)(S27).

On the other hand, when the desire temperature of the user is 24°C~27°C (S22), when the temperature added 1°C to the desire temperature is reached (25°C~28°C), the operation of the compressor is turned on to supply the cool air into the room. At that time, when the indoor temperature is descended to the temperature subtracted 1°C (23°C~26°C) from the desire temperature (24°C~27°C) as the cool air is provided in the room, the operation of the compressor 6 is turned off to block the cool air. That is, in case that the desire temperature of the user is 24°C~27°C, the amplitude of the indoor temperature (rising amplitude and descending amplitude) is set to be ±1°C to control the indoor temperature (S25)(S28).

On the other hand, in case that the desire temperature of the user is 24°C or less (S23), when the temperature added 1.5°C (25.5°C or less) to the desire temperature (24°C or less) is reached, the operation of the compressor 6 is turned on to supply the cool air into the room. At that time, when the indoor temperature is descended to the temperature subtracted 1.5°C (22.5°C) from the desire temperature (24°C or less) as the cool air is provided in the room, the operation of the compressor 6 is turned off to block the cool air. That is, in case that the desire temperature of the user is 24°C or less, the amplitude of the indoor temperature (rising amplitude and descending amplitude) is set to be ±1.5°C to control the indoor temperature (S26)(S29).

Therefore, in case that the stimulation for the feelings of hot and cold is strong, the pleasant feeling is improved even through the discrimination value of the stimulation is large when the desire indoor temperature (desire temperature of the user) is lower than the reference temperature (24°C), and therefore, the rising amplitude and the descending amplitude of the indoor temperature are increased by turning on/off the operation of the compressor 6. On the contrary, when the desire temperature is higher than the reference temperature (27°C), the pleasant feeling is improved even though the discrimination value of the stimulation is small, and therefore, the rising amplitude and the descending amplitude of the indoor temperature are decreased by turning on/off the operation of the compressor 6.

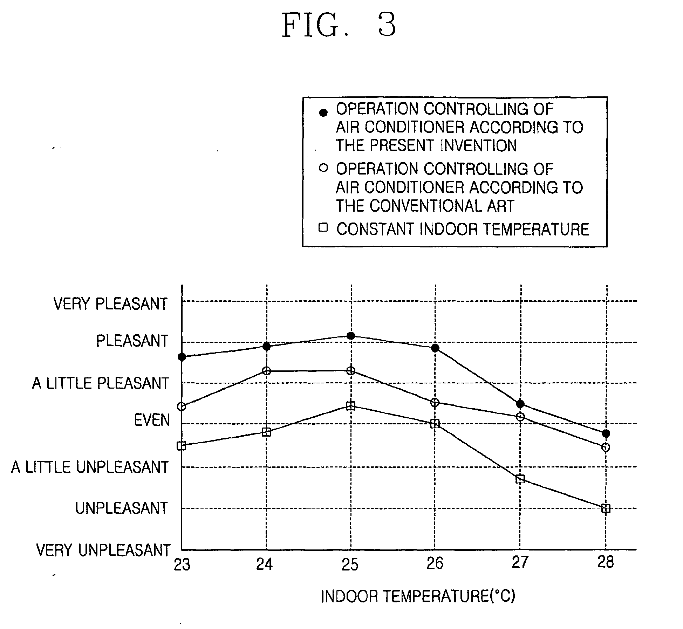

Figure 3 is a view showing the pleasant feeling of the user when the operation controlling method for the air conditioner according to the present invention is applied to the air conditioner.

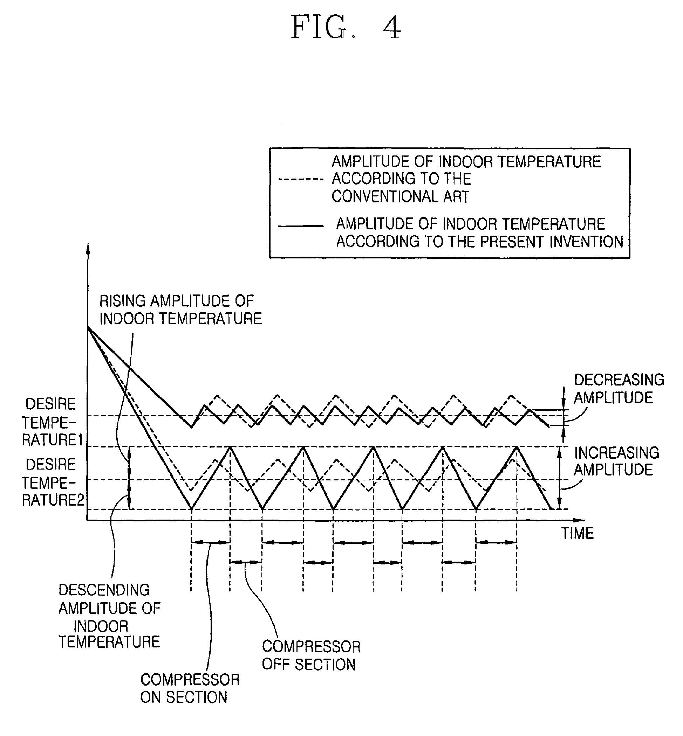

As shown therein, when the indoor temperature is maintained to be a predetermined temperature always as in the conventional art, there is a limit to improve the pleasant feeling of the user. Also, when the compressor 6 is operation so that the indoor temperature is risen or descended with a predetermined amplitude, the pleasant feeling can be improved, however, there is also a limit to improve the pleasant feeling because the feeling of hot and cold is little changed. Therefore, according to the present invention, the pleasant feeling can be maximized by controlling the amplitude of the indoor temperature (rising amplitude and descending amplitude) differently according to the desire temperature of the user. This will be described in more detail with reference to Figure 4 as follows.

Figure 4 is a chart comparing the amplitude of the indoor temperature changed according to the desire temperature of the user in the operation controlling method for the air conditioner of the present invention to the amplitude of the indoor temperature according to the conventional art. That is, according to the present invention, when the desire temperature of the user (desire temperature 1) is higher than the reference temperature (27°C), the amplitude of the indoor temperature is decreased, and when the desire temperature of the user (desire temperature 2) is lower than the reference temperature (24°C), the amplitude of the indoor temperature is increased using the Weber's law that the rate of the cold feeling for the warmth feeling is always constant. Herein, the Weber's law can be expressed as following

formula 1.

$$S = \Delta L / L = \text{constant} \quad \text{--------------- formula 1}$$

Herein, the S represents Weber rate, $\Delta L$ represents stimulation discrimination value, and L represents the stimulation level. That is, the stimulation discrimination value means a minimum level that a user can feel the stimulation increase in case that the user has been stimulated. The Weber's law represents that a rate of a certain stimulation and the stimulation discrimination value at that time is constant. That is, when a person is stimulated a little, the person is able to recognize small increase of the stimulation, however, when the person is stimulated a lot, the person can not feel the increase of the stimulation unless the stimulation is increased a lot.

As described above, according to the present invention, in case that the desire temperature set by the user is low, the rising amplitude and the descending amplitude are controlled to be large (the amplitude of the indoor temperature is increased), and in case that the indoor desire temperature set by the user is high, the rising amplitude and the descending amplitude of the indoor temperature are controlled to be small (the amplitude of the indoor temperature is decreased). Thereby, a thermal comfort can be improved.

Also, according to the present invention, the amplitude of the indoor temperature is increased or decreased in accordance with the desire temperature set by the user, and thereby, the power consumption of the air conditioner can be reduced, that is, power-saving cooling operation can be performed.

## Claims

1.  An operation controlling method for an air conditioner comprising the steps of:

    setting a predetermined number of reference temperatures;
    comparing a desire temperature of a user to the predetermined number of reference temperatures; and
    increasing or decreasing a rising amplitude and a descending amplitude of indoor temperature as a predetermined value on a basis of the desire temperature of the user as a result of the above comparing.

2.  The method of claim 1, wherein the rising amplitude and the descending amplitude of the indoor temperature are increased to be higher than a predetermined value when the desire temperature is lower than the predetermined number of reference temperatures.

3.  The method of claim 1, wherein the rising amplitude and the descending amplitude of the indoor temperature are decreased to be lower than a predetermined value when the desire temperature is higher than the predetermined number of reference temperatures.

4.  The method of claim 1, wherein the reference temperatures are set to be a plurality according to the desire temperature of the user.

5.  The method of claim 1, wherein the rising amplitude and the descending amplitude are set in advance according to the desire temperature.

6.  The method of claim 1, wherein the step of increasing or decreasing is for improving pleasant feeling and feeling of warmth by changing the rising amplitude and the descending amplitude of the indoor temperature according to the result of comparing.

7.  The method of claim 1, wherein the predetermined number of reference temperatures are 24°C and 27°C.

8.  The method of claim 7, wherein the operation of the air conditioner is controlled so that the rising amplitude and the descending amplitude of the indoor temperature are increased to be larger than 1.5°C when the desire temperature is 24°C or less.

9.  The method of claim 7, wherein the rising amplitude and the descending amplitude of the indoor temperature are increased as 1°C when the desire temperature is 24°C ~27°C.

10. The method of claim 7, wherein the rising amplitude and the descending amplitude of the indoor temperature are decreased less than 0.3°C when the desire temperature is 27°C or more.

11. A method for controlling indoor temperature so as to correspond a desire temperature of a user, the method comprising the steps of:

setting a predetermined number of reference temperatures;
comparing the desire temperature of the user to the set predetermined number of reference temperatures;
increasing a rising amplitude and a descending amplitude of the indoor temperature to be larger than a predetermined value on a basis of the desire temperature, when the desire temperature is lower than the predetermined number of reference temperatures; and
decreasing the rising amplitude and the descending amplitude of the indoor temperature to be smaller than a predetermined value on a basis of the desire temperature, when the desire temperature is higher than the predetermined reference temperatures.

12. The method of claim 11, wherein the reference temperature is set to be a plurality of temperatures according to the desire temperature of the user.

13. The method of claim 11, wherein the rising amplitude and the descending amplitude of the indoor temperature are set in advance according to the desire temperature.

14. The method of claim 11, wherein the step of controlling the operation of the air conditioner improves pleasant feeling and feeling of warmth by changing the rising amplitude and the descending amplitude of the indoor temperature according to the result of comparing.

15. The method of claim 11, wherein the predetermined number of reference temperatures are 24°C and 27°C.

16. The method of claim 15, wherein the rising amplitude and the descending amplitude of the indoor temperature are increased to be larger than 1.5°C when the desire temperature is 24°C or less.

17. The method of claim 15, wherein the rising amplitude and the descending amplitude of the indoor temperature are increased as 1°C when the desire temperature is 24°C~27°C.

18. The method of claim 15, wherein the rising amplitude and the descending amplitude of the indoor temperature are decreased to be smaller than 0.3°C when the desire temperature is 27°C or more.

**Patentansprüche**

1. Verfahren zur Steuerung des Betriebes einer Klimaanlage, das folgende Schritte umfasst:

Einstellen einer zuvor festgelegten Anzahl von Referenztemperaturen;
Vergleichen einer von einem Benutzer gewünschten Temperatur mit der zuvor festgelegten Anzahl von Referenztemperaturen; und
Vergrößern oder Verkleinern einer ansteigenden Amplitude und einer abfallenden Amplitude einer Innentemperatur als ein zuvor festgelegter Wert auf der Grundlage der von dem Benutzer gewünschten Temperatur infolge des obigen Vergleichs.

2. Verfahren nach Anspruch 1, wobei die ansteigende Amplitude und die abfallende Amplitude der Innentemperatur auf der Wert erhöht werden, der größer ist als ein zuvor festgelegter Wert, wenn die gewünschte Temperatur niedriger ist als die zuvor festgelegte Anzahl von Referenztemperaturen.

3. Verfahren nach Anspruch 1, wobei die ansteigende Amplitude und die abfallende Amplitude der Innentemperatur auf der Wert verringert werden, der kleiner ist als ein zuvor festgelegter Wert, wenn die gewünschte Temperatur höher ist als die zuvor festgelegte Anzahl von Referenztemperaturen.

4. Verfahren nach Anspruch 1, wobei die Referenztemperaturen entsprechend der von dem Benutzer gewünschten Temperatur auf mehrere eingestellt werden.

**5.** Verfahren nach Anspruch 1, wobei die ansteigende Amplitude und die abfallende Amplitude im Voraus entsprechend der gewünschten Temperatur eingestellt werden.

**6.** Verfahren nach Anspruch 1, wobei der Schritt des Vergrößerns oder Verkleinerns der Verbesserung des Wohl-und Wärmegefühls dient, indem die ansteigende Amplitude und die abfallende Amplitude der Innentemperatur entsprechend dem Ergebnis des Vergleichens geändert werden.

**7.** Verfahren nach Anspruch 1, wobei die zuvor festgelegten Anzahl von Referenztemperaturen 24°C und 27°C ist.

**8.** Verfahren nach Anspruch 7, wobei der Betrieb der Klimaanlage so gesteuert wird, dass die ansteigende Amplitude und die abfallende Amplitude der Innentemperatur auf einen Wert vergrößert werden, der über 1,5°C liegt, wenn die gewünschte Temperatur 24°C oder weniger beträgt.

**9.** Verfahren nach Anspruch 7, wobei die ansteigende Amplitude und die abfallende Amplitude der Innentemperatur als 1°C vergrößert werden, wenn die gewünschte Temperatur 24°C ~ 27°C beträgt.

**10.** Verfahren nach Anspruch 7, wobei die ansteigende Amplitude und die abfallende Amplitude der Innentemperatur um weniger als 0,3°C verringert werden, wenn die gewünschte Temperatur 27°C oder mehr beträgt.

**11.** Verfahren zur Steuerung des Betriebes einer Klimaanlage entsprechend der von einem Benutzer gewünschten Temperatur, wobei das Verfahren folgende Schritte umfasst:

Einstellen einer zuvor festgelegten Anzahl von Referenztemperaturen;
Vergleichen der von dem Benutzer gewünschten Temperatur mit der eingestellten, zuvor festgelegten Anzahl von Referenztemperaturen;
Vergrößern einer ansteigenden Amplitude und einer abfallenden Amplitude der Innentemperatur auf einen Wert, der größer ist als ein zuvor festgelegter Wert, auf der Grundlage der gewünschten Temperatur, wenn die gewünschte Temperatur kleiner ist als die zuvor festgelegte Anzahl von Referenztemperaturen; und
Verkleinern der ansteigenden Amplitude und der abfallenden Amplitude der Innentemperatur auf einen Wert, der kleiner ist als ein zuvor festgelegter Wert, auf der Grundlage der gewünschten Temperatur, wenn die gewünschte Temperatur größer ist als die zuvor festgelegten Referenztemperaturen.

**12.** Verfahren nach Anspruch 11, wobei die Referenztemperatur entsprechend der von dem Benutzer gewünschten Temperatur auf mehrere Temperaturen eingestellt wird.

**13.** Verfahren nach Anspruch 11, wobei die ansteigende Amplitude und die abfallende Amplitude der Innentemperatur im Voraus entsprechend der gewünschten Temperatur eingestellt werden.

**14.** Verfahren nach Anspruch 11, wobei der Schritt des Steuerns des Betriebes der Klimaanlage das Wohl- und wärmegefühl verbessert, indem die ansteigende Amplitude und die abfallende Amplitude der Innentemperatur entsprechend dem Ergebnis des Vergleichens geändert werden.

**15.** Verfahren nach Anspruch 11, wobei die zuvor festgelegten Anzahl von Referenztemperaturen 24°C und 27°C ist.

**16.** Verfahren nach Anspruch 15, wobei die ansteigende Amplitude und die abfallende Amplitude der Innentemperatur auf einen Wert vergrößert werden, der über 1,5°C liegt, wenn die gewünschte Temperatur 24°C oder weniger beträgt.

**17.** Verfahren nach Anspruch 15, wobei die ansteigende Amplitude und die abfallende Amplitude der Innentemperatur als 1°C vergrößert werden, wenn die gewünschte Temperatur 24°C ~ 27°C beträgt.

**18.** Verfahren nach Anspruch 15, wobei die ansteigende Amplitude und die abfallende Amplitude der Innentemperatur auf einen Wert verkleinert werden, der kleiner als 0,3°C ist, wenn die gewünschte Temperatur 27°C oder mehr beträgt.

**Revendications**

**1.** Un procédé de commande de fonctionnement pour un climatiseur comprenant les étapes consistant à :

fixer un nombre prédéterminé de températures de référence;

comparer une température désirée fixée par un utilisateur avec le nombre prédéterminé de températures de référence; et

augmenter ou diminuer une amplitude d'élévation et une amplitude d'abaissement de la température intérieure pour lui donner une valeur prédéterminée, sur la base de la température désirée fixée par l'utilisateur, sous l'effet de la comparaison ci-dessus.

2. Le procédé selon la revendication 1, dans lequel l'amplitude d'élévation et l'amplitude d'abaissement de la température intérieure sont augmentées de façon à être supérieures à une valeur prédéterminée lorsque la température désirée est inférieure au nombre prédéterminé de températures de référence.

3. Le procédé selon la revendication 1, dans lequel l'amplitude d'élévation et l'amplitude d'abaissement de la température intérieure sont diminuées de façon à être inférieures à une valeur prédéterminée lorsque la température désirée est supérieure au nombre prédéterminé de températures de référence.

4. Le procédé selon la revendication 1, dans lequel les températures de référence sont fixées de façon à être une multiplicité, conformément à la température désirée fixée par l'utilisateur.

5. Le procédé selon la revendication 1, dans lequel l'amplitude d'élévation et l'amplitude d'abaissement sont fixées à l'avance conformément à la température désirée.

6. Le procédé selon la revendication 1, dans lequel l'étape d'augmentation ou de diminution est destinée à améliorer une impression agréable et une impression de chaleur en changeant l'amplitude d'élévation et l'amplitude d'abaissement de la température intérieure conformément au résultat de comparaison.

7. Le procédé selon la revendication 1, dans lequel le nombre prédéterminé de températures de référence comprend 24°C et 27°C.

8. Le procédé selon la revendication 7, dans lequel le fonctionnement du climatiseur est commandé de façon que l'amplitude d'élévation et l'amplitude d'abaissement de la température intérieure soient augmentées de façon à être supérieures à 1,5°C lorsque la température désirée est de 24°C ou moins.

9. Le procédé selon la revendication 7, dans lequel l'amplitude d'élévation et l'amplitude d'abaissement de la température intérieure sont augmentées de façon à être égales à 1°C lorsque la température désirée est de 24°C~ 27°C.

10. Le procédé selon la revendication 7, dans lequel l'amplitude d'élévation et l'amplitude d'abaissement de la température intérieure sont diminuées de façon à être inférieures à 0,3°C lorsque la température désirée est de 27°C ou plus.

11. Un procédé pour commander une température intérieure de façon qu'elle corresponde à une température désirée fixée par un utilisateur, le procédé comprenant les étapes consistant à :

fixer un nombre prédéterminé de températures de référence;

comparer la température désirée fixée par l'utilisateur au nombre prédéterminé de températures de référence fixé;

augmenter une amplitude d'élévation et une amplitude d'abaissement de la température intérieure de façon qu'elle soit supérieure à une valeur prédéterminée, sur la base de la température désirée, lorsque la température désirée est inférieure au nombre prédéterminé de températures de référence; et

diminuer l'amplitude d'élévation et l'amplitude d'abaissement de la température intérieure de façon qu'elle soit inférieure à une valeur prédéterminée, sur la base de la température désirée, lorsque la température désirée est supérieure aux températures de référence prédéterminées.

12. Le procédé selon la revendication 11, dans lequel la température de référence est fixée de façon à être une multiplicité de températures, conformément à la température désirée fixée par l'utilisateur.

13. Le procédé selon la revendication 11, dans lequel l'amplitude d'élévation et l'amplitude d'abaissement de la température intérieure sont fixées à l'avance conformément à la température désirée.

14. Le procédé selon la revendication 11, dans lequel l'étape de commande du fonctionnement du climatiseur améliore une impression agréable et une impression de chaleur en changeant l'amplitude d'élévation et l'amplitude d'abaissement de la température intérieure conformément au résultat de comparaison.

**15.** Le procédé selon la revendication 11, dans lequel le nombre prédéterminé de températures de référence comprend 24°C et 27°C.

**16.** Le procédé selon la revendication 15, dans lequel l'amplitude d'élévation et l'amplitude d'abaissement de la température intérieure sont augmentées de façon à être supérieures à 1,5°C lorsque la température désirée est de 24°C ou moins.

**17.** Le procédé selon la revendication 15, dans lequel l'amplitude d'élévation et l'amplitude d'abaissement de la température intérieure sont augmentées de façon à être égales à 1°C lorsque la température désirée est de 24°C ~ 27°C.

**18.** Le procédé selon la revendication 15, dans lequel l'amplitude d'élévation et l'amplitude d'abaissement de la température intérieure sont diminuées de façon à être inférieures à 0,3°C lorsque la température désirée est de 27°C ou plus.

# FIG. 1

# FIG. 2

AIR CONDITIONER STARTS

S21 — 27°C<DESIRE TEMPERATURE — NO →

S22 — 24°C<DESIRE TEMPERATURE <27°C — NO →

S23 — 24°C>DESIRE TEMPERATURE

**YES (from S21):**
COMPRESSOR 'ON' CONDITION =DESIRE TEMPERATURE+0.3°C
COMPRESSOR 'OFF' CONDITION =DESIRE TEMPERATURE-0.3°C — S24

**YES (from S22):**
COMPRESSOR 'ON' CONDITION =DESIRE TEMPERATURE+1.0°C
COMPRESSOR 'OFF' CONDITION =DESIRE TEMPERATURE-1.0°C — S25

**YES (from S23):**
COMPRESSOR 'ON' CONDITION =DESIRE TEMPERATURE+1.5°C
COMPRESSOR 'OFF' CONDITION =DESIRE TEMPERATURE-1.5°C — S26

S27 — AIR CONDITIONER STOPPED? — NO / YES → STOP

S28 — AIR CONDITIONER STOPPED? — NO / YES → STOP

S29 — AIR CONDITIONER STOPPED? — NO / YES → STOP

# FIG. 3

Legend:
- ● OPERATION CONTROLLING OF AIR CONDITIONER ACCORDING TO THE PRESENT INVENTION
- ○ OPERATION CONTROLLING OF AIR CONDITIONER ACCORDING TO THE CONVENTIONAL ART
- □ CONSTANT INDOOR TEMPERATURE

Y-axis (top to bottom): VERY PLEASANT, PLEASANT, A LITTLE PLEASANT, EVEN, A LITTLE UNPLEASANT, UNPLEASANT, VERY UNPLEASANT

X-axis: 23, 24, 25, 26, 27, 28

INDOOR TEMPERATURE(°C)

# FIG. 4